# EUROPEAN PATENT SPECIFICATION

(11) **EP 3 802 114 B1**
(45) Date of publication and mention of the grant of the patent: **24.04.2024**
(21) Application number: 19728435.9
(22) Date of filing: 04.06.2019
(51) Int. Cl.: B32B 13/02, B32B 13/04

(54) **FIBER CEMENT PRODUCTS AND METHODS FOR THE PRODUCTION THEREOF**
FASERZEMENTPRODUKTE UND VERFAHREN ZUR HERSTELLUNG DAVON
PRODUITS EN FIBROCIMENT ET LEURS PROCÉDÉS DE PRODUCTION

(30) Priority: 05.06.2018 EP 18175934
(43) Date of publication of application: 14.04.2021
(73) Proprietor: Eternit B.V., 7471 LV Goor (NL)
(72) Inventor: BAKKER, Gerrit Albert, 7442 NV Nijverdal (NL)
(74) Representative: Etex Services NV - Etex IPSC
(86) International application number: PCT/EP2019/064527
(87) International publication number: WO 2019/234044

(56) References cited:
- EP-A1- 3 067 218
- WO-A1-2006/128890

## Description

### Field of the invention

The present invention relates to fiber cement products as well as to methods for manufacturing such products. The present invention further relates to various uses of these fiber cement products, in particular as building elements.

### Background of the invention

In the past, asbestos cement products were widely used as building materials. However, since the late nineties, all newly manufactured fiber cement products in Europe but also in many other countries are asbestos-free and instead contain cellulose fibers and/or synthetic fibers as reinforcing components. In accordance with European standard EN-494, a substantial percentage of these non-asbestos containing fiber cement products needs to be labeled with the acronym "NT", which stands for "Non-asbestos Technology". Typically, this acronym is durably stamped at a fixed position on the surface of the fiber cement product during manufacturing. This enables architects, installers and construction workers to easily distinguish non-asbestos containing from asbestos-containing fiber cement products. However, once a building or construction work has been finalized, it cannot always be clearly determined anymore by the end user whether all incorporated fiber cement materials are effectively asbestos-free. This is especially important in the case of renovating, demolishing and/or buying or selling building structures. Indeed, according to the European standard EN-494 only a minimum of 15% of fiber cement sheets and a minimum of 50% of fiber cement accessories or components needs to be marked, thereby ensuring that at least one or more products per package contains a label. This however results in a significant percentage of non-labeled products, which cannot be quickly and easily identified anymore as being asbestos-free individually. Also, cutting the fiber cement products into smaller pieces during the construction process, often results in loss of the label, which is typically printed near one of the edges of the product. Finally, even in cases where the label is (still) present on the product upon use by the construction worker, it is in the end often not visible anymore once the product is fully integrated in a building, especially in the case of smaller pieces, such as building accessories and components.

A proposed way of providing a clear label for non-asbestos fiber cement products is coating the outer surface of each product with a differentiating pigmented coating. However, the problem in this case is that most finished fiber cement products, like corrugated sheets, slates, façade elements, sidings and all associated fiber cement accessories are typically coated on their outside surface with a purely esthetic coating or alternatively and/or additionally with a coating fulfilling a technical function (e.g. hydrophobic coating). Replacing the latter coating with a labeling coating is therefore not feasible both for esthetical and technical reasons.

In addition, providing the products with a back-side coating involves different issues. Ideally, a fiber cement product needs to maintain at least one main water-permeable surface through which water entrapped inside the product can find its way out and vice versa. It will be clear that if a fiber cement product is coated on most of its surface (e.g. its main back and front surface), the water becomes entrapped in the core of the product, which will give rise to cracks, delamination and/or condensation as soon as the product is exposed to varying weather conditions, such as freeze-thaw, rain and heat.

WO 2006/128890 A relates to a method for marking fibrous products using luminescent materials and methods for detecting marked products.

EP 3 067 218 A relates to ink-jet printing on fiber cement products.

### Summary of the invention

An object of the present invention is to provide improved fiber cement products, as well as processes for the production thereof, which products can be quickly and easily identified as being asbestos-free in their individual form, even after integration in a building structure.

The present inventors have managed to develop such new and innovative labelled asbestos-free fiber cement products, each individually containing a clear label indicating the absence of asbestos, which label (i) remains visible even after processing and incorporation into a building, (ii) is esthetically acceptable and (iii) does not affect the physico-chemical properties of the product.

In a first aspect, the fiber cement products of the present invention comprise at least two fiber cement layers produced by a Hatschek process, characterized in that said at least two fiber cement layers are interlaminated by means of a layer of pigment. The inventors have found that by introducing one or more interlaminating layers of pigment in the fiber cement products is an excellent way of labelling non-asbestos products. Applying one or more thin interlaying layers of pigment is furthermore less labor intensive and a lot more cost-effective than coloring the entire fiber cement product in the mass. In fact, up to 90% less pigment is needed for producing the fiber cement products of the invention as compared to when the entire inner mass of the product would be pigmented (through-colored).

The pigment layer(s) in the products of the present invention are clearly visible in each product individually, in particular at each of the cross-sections upon installation. In this way, the fiber cement products of the invention each contain a clearly visible label indicating the absence of asbestos, without adversely affecting the esthetic appearance or the physico-chemical properties of the product. What is more, the inventors have found that the interlaminar bonding between different fiber cement layers is even improved through the presence of one or more labelling pigment layers. Without being bound to any theory or hypothesis, the inventors believe that, since a pigment particle typically has a smaller diameter than the average diameter of the particles present in a standard fiber cement slurry, the pigment layer acts as a fine-grained filler. The remaining smaller pores existing between the slurry particles that otherwise would remain void, are filled up with pigment particles and thereby locally increase the interlaminar bonding of the fiber cement end product. It will be clear that the more interlaminar pigment layers are present in the fiber cement product, the stronger this effect will become apparent.

In particular embodiments, the one or more layers of pigment as present in the fiber cement products of the present invention comprise an organic pigment and/or an inorganic pigment. In further particular embodiments, the one or more layers of pigment as present in the fiber cement products of the present invention comprise an organic pigment. In yet further particular embodiments, the one or more layers of pigment as present in the fiber cement products of the present invention comprise a phtalocyanine pigment.

In particular embodiments, the one or more layers of pigment as present in the fiber cement products of the present invention comprise a green pigment.

In particular embodiments, the fiber cement products of the present invention are building element, such as but not limited to roofing elements, façade elements or ceiling elements, both for internal and external applications. In further particular embodiments, the fiber cement products of the present invention are roof building sheets, roofing accessories or roofing components. In yet further particular embodiments, the fiber cement products of the present invention are corrugated sheets, slates, roof ridges, roof verges, roof eaves, roof aprons, roof hips, roof valleys, roof inlets and/or outlets and/or roof connections.

In a second aspect, the present invention provides a process for producing fiber cement products according to the invention, wherein the process comprises the steps of:
a. Providing a fiber cement layer by means of a Hatschek process,
b. Depositing a layer of pigment onto the fiber cement layer,
c. Providing another fiber cement layer onto the layer of pigment by means of a Hatschek process so as to obtain an uncured fiber cement product,
d. Curing the uncured fiber cement product.

In particular embodiments of the process according to the invention, steps (b) and (c) are repeated at least once before curing the uncured fiber cement product.

In particular embodiments of the process according to the invention, the uncured fiber cement product is cut, molded and/or shaped.

In particular embodiments of the process according to the invention, the pigment is a green pigment.

In particular embodiments of the process according to the invention, the pigment is an organic pigment and/or an inorganic pigment. In further particular embodiments of the process according to the invention, the pigment is an organic pigment. In yet further particular embodiments of the process according to the invention, the pigment is a phtalocyanine pigment.

In a third aspect, the invention provides uses of a fiber cement products according to the invention as a building element.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

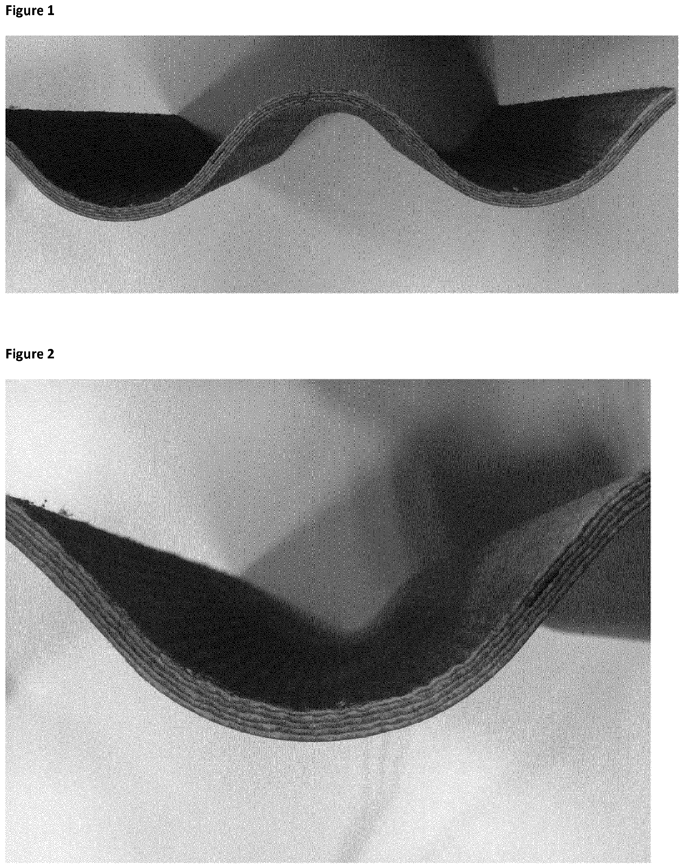

**Figure 1** is a picture showing the cross-section of a sample of a corrugated fiber cement sheet according to specific embodiments of the present invention.
**Figure 2** is a picture showing the cross-section of a sample of a corrugated fiber cement sheet according to specific embodiments of the present invention.

### Description of illustrative embodiments

The present invention will be described with respect to particular embodiments.

It is to be noted that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The terms "(fiber) cementitious slurry" or "(fiber) cement slurry" as referred to herein generally refer to slurries at least comprising water, fibers and cement. The fiber cement slurry as used in the context of the present invention may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives. In the context of the processes of the present invention, the fiber cement slurry can thus be provided by one or more sources of at least cement, water and fibers. Optionally, these one or more sources of at least cement, water and fibers may operatively be connected to a continuous mixing device constructed so as to form a cementitious fiber cement slurry. In particular embodiments, when using cellulose fibers or the equivalent of waste paper fibers, a minimum of about 2wt%, such as at least about 3wt%, such as at least about 4wt% of these cellulose fibers (compared to the total initial dry weight of the slurry) may be used. In further particular embodiments, when exclusively cellulose fibers are used, between about 4wt% to about 12wt%, such as more particularly, between about 7wt% and about 10wt% of these cellulose fibers (compared to the total initial dry weight of the slurry) may be used. If cellulose fibers are replaced by short mineral fibers such as rock wool, it is most advantageous to replace them in a proportion of 1.5 to 3 times the weight, in order to maintain approximately the same content per volume. In long and cut fibers, such as glass fiber rovings or synthetic high-module fibers, such as polypropylene, polyvinyl acetate, polycarbonate or acrylonitrile fibers the proportion can be lower than the proportion of the replaced cellulose fibers. The fineness of the fibers (measured in Shopper-Riegler degrees) is in principle not critical to the processes of the invention. Yet in particular embodiments, where autoclave-cured fiber cement products are envisaged, it has been found that a range between about 15 DEG SR and about 45 DEG SR can be particularly advantageous for the processes of the invention. In alternative embodiments, where air-cured fiber cement products are envisaged, it has been found that a range between about 35 DEG SR and about 75 DEG SR can be particularly advantageous for the processes of the invention.

"Fiber(s)" present in the fiber cement slurry as described herein may be for example process fibers and/or reinforcing fibers which both may be organic fibers (typically cellulose fibers) or synthetic fibers (polyvinylalcohol, polyacrilonitrile, polypropylene, polyamide, polyester, polycarbonate, etc.).

"Cement" present in the fiber cement slurry as described herein may be for example but is not limited to Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

The terms "predetermined" and "predefined" as used herein when referring to one or more parameters or properties generally, and particularly in the context of the present invention, mean that the desired value(s) of these parameters or properties have been determined or defined beforehand, i.e. prior to the start of the process for producing the products that are characterized by one or more of these parameters or properties.

The term "fiber cement layer" as used herein generally, and particularly in the context of the present invention, refers to any flat, optionally substantially rectangular, layer or cake essentially consisting of a fiber cement composition and having a thickness of at least about 1 mm, in particular between about 1 mm and 200 mm, more particularly between about 2 mm and about 150 mm, most particularly between about 4 mm and about 100 mm, such as between about 8 mm and about 10 mm.

The term "water-permeable" as used herein when referring to a water-permeable (region of a) transport belt generally means that the material of which the water-permeable (region of the) belt is made allows water to flow through its structure to a certain extent.

The "water-permeability" as used herein when referring to the water-permeability of a (region of a) transport belt generally refers to the extent or degree to which the material of which the water-permeable (region of the) belt is made, allows water to flow through its structure. Suitable materials for water-permeable transport belts are known to the person skilled in the art, such as but not limited to felts.

In the context of the present invention, the use of the term "fiber cement film" refers to such a thin layer of fiber cement being applied onto the felt transport belt by one or more sieves rotating in a fiber cement slurry that is present in one or more vats of the Hatschek process. As may be understood from the aforementioned, series of thin fiber cement layers are produced on the one or more sieves from the Hatschek machine and subsequently superimposed and transferred from the one or more sieves to the transport belt, resulting in one or more uncured Hatschek fiber cement layers after accumulation on an accumulation roll. Thus, it will be clear that, when referring to "a fiber cement film" in the context of the present invention, it is to be understood that this term encompasses, where applicable, both the meaning of one single fiber cement film having a thickness of between about 0.01 mm and about 0.9 mm, such as in particular between about 0.05 mm and about 0.5 mm, such as between about 0.1 mm and about 0.4 mm, such as about 0.3 mm. (i.e. one thin layer of fiber cement also called a mono-layer, a single layer or a primary layer, that is applied onto the felt transport belt by a sieve from a vat of the Hatschek process) as well as the meaning of a layer comprising two or more superimposed fiber cement layers, each having a thickness of between about 0.01 mm and about 0.9 mm, such as in particular between about 0.05 mm and about 0.5 mm, such as between about 0.1 mm and about 0.4 mm, such as about 0.3 mm (i.e. two or more superimposed thin layers of fiber cement applied onto the felt transport belt by two or more sieves from a vat of the Hatschek process). The skilled person will understand, depending on the particular configuration of the Hatschek section, that when referring to processes of the invention in general both meanings of the term "fiber cement film" as described above will be applicable, while in more particular embodiments only one of both meanings are applicable. For instance, in a particular case where only one sieve is used in the Hatschek section for performing the processes of the invention, "a fiber cement film" as used herein means only one single layer having a thickness of between about 0.01 mm and about 0.9 mm that is applied onto the felt transport belt by the sieve from a vat of the Hatschek process. On the other hand, where two or more sieves are used in the Hatschek section for performing the processes of the invention, "a fiber cement film" as used herein means a superposition of two or more single layers, each having a thickness of between about 0.01 mm and about 0.9 mm, which are applied onto the felt transport belt by the sieve from a vat of the Hatschek process.

A "(fiber cement) sheet" as used herein, also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide a roofing element, such as a corrugated sheet or a slate, or an outer surface to walls, both internal as well as external a building or construction, e.g. as façade plate, siding, etc.

The term "pigment" as used herein refers to a dry insoluble substance, usually pulverized, which when suspended in a liquid vehicle becomes a paint, ink, etc. Pigments typically consist of tiny solid particles that are used to enhance the appearance by providing color and/or to improve the physical (functional) properties of the paint or ink. Pigments used to provide color generally range from 0.2 to 0.4 microns in diameter. Functional pigments are typically 2-4 microns in diameter, but they may be as large as 50 microns.

The term "prime pigment" as used herein refers to any pigment (as defined herein), which is capable of providing whiteness and/or color to a substance while also contributing significantly to the hiding power of said substance. Prime pigments can be subdivided in white pigments and color pigments.

The term "white pigment" as referred to herein means a prime pigment, capable of scattering light and providing whiteness and hiding in flat or glossy paint or ink. White inorganic pigments include but are not limited to antimony pigments including Antimony White:Sb₂O₃; lead pigments (toxic) including White Lead(PbCO₃)₂-Pb(OH)₂; titanium pigments including Titanium White: titanium(IV) oxide TiO_{2 and}; zinc pigments including Zinc White: Zinc Oxide (ZnO).

The term "color pigment" as referred to herein means a prime pigment, capable of selectively absorbing light and providing color to a paint or ink. There are two main types of color pigments: organic pigments, which include the brighter colors but are not highly durable in exterior use and inorganic pigments, which are not as bright as organic colors but are the most durable exterior pigments.

The term "inorganic pigment" as used herein refers to naturally occurring mineral coloring compounds typically consisting of metallic salts. Inorganic pigments are usually oxides or sulphides of one or more metals. Inorganic pigments include for instance but are not limited to:
- blue inorganic pigments:
   ∘ aluminum pigments, including ultramarine: a complex naturally occurring pigment of sulfur-containing sodio-silicate (Na₈₋₁₀Al₆Si₆O₂₄S₂₋₄);
   ∘ cobalt pigments, including Cobalt Blue and Cerulean Blue: cobalt(II) stannate;
   ∘ copper pigments, including Egyptian Blue: a synthetic pigment of calcium copper silicate (CaCuSi₄O₁₀) and Han Blue BaCuSi4O10; and
   ∘ iron pigments, including Prussian Blue: a synthetic pigment of ferric hexacyanoferrate (Fe₇(CN)₁₈);
- green inorganic pigments
   ∘ cadmium pigments, including Viridian: a dark green pigment of hydrated chromium(III) oxide (Cr₂O₃) and Cadmium Green: a light green pigment consisting of a mixture of Cromium Yellow (CrS) and Viridian (Cr₂O₃);
   ∘ chromium pigments, including Chrome Green;
   ∘ copper pigments, including Paris Green: copper(II) acetoarsenite (Cu(C₂H₃O₂)₂-3Cu(AsO₂)₂) and Scheele's Green (also called Schloss Green): copper arsenite CuHAsO_{3;}
- yellow inorganic pigments
   ∘ arsenic pigments including Orpiment natural monoclinic arsenic sulfide (As₂S₃);
   ∘ cadmium pigments including Cadmium Yellow:cadmium sulfide (CdS);
   ∘ chromium pigments including Chrome Yellow: natural pigment of lead(II) chromate (PbCrO₄);
   ∘ cobalt pigments including Aureolin (also called Cobalt Yellow): Potassium cobaltinitrite (Na₃Co(NO₂)_{6;}
   ∘ iron pigments including Yellow Ochre: a naturally occurring clay of hydrated iron oxide (Fe₂O₃.H₂O);
   ∘ lead pigments including Naples Yellow;
   ∘ titanium pigments including Titanium Yellow;
   ∘ tin pigments including Mosaic gold: stannic sulfide (SnS₂);
- orange inorganic pigments
   ∘ cadmium pigments including Cadmium Orange: an intermediate between cadmium red and cadmium yellow: cadmium sulfoselenide;
   ∘ chromium pigments including Chrome Orange: a naturally occurring pigment mixture composed of lead(II) chromate and lead(II) oxide. (PbCrO₄ + PbO)
- red inorganic pigments
   ∘ cadmium pigments including Cadmium Red: cadmium selenide (CdSe);
   ∘ iron oxide pigments including Sanguine, Caput Mortuum, Oxide Red, Red Ochre: anhydrous Fe₂O₃, Burnt Sienna: a pigment produced by heating Raw Sienna, Venetian Red;
   ∘ lead pigments (toxic) including Red Lead: lead tetroxide, Pb₃O_{4;}
   ∘ mercury pigments (toxic) including Vermilion: Synthetic and natural pigment: Occurs naturally in mineral cinnabar; Mercuric sulfide (HgS);
- brown inorganic pigments
   ∘ clay earth pigments (naturally formed iron oxides) including Raw Umber: A natural clay pigment consisting of iron oxide, manganese oxide and aluminum oxide: Fe₂O₃ + MnO₂ + nH₂O + Si + AlO₃; Raw Sienna: a naturally occurring yellow-brown pigment from limonite clay;
- black inorganic pigments
   ∘ Carbon pigments including Carbon Black, Ivory Black, Vine Black, Lamp Black;
   ∘ Iron Pigments including Fe₃O₄;
   ∘ Titanium pigments: Titanium Black;
- grey inorganic pigments
   ∘ Payne's grey: a mixture of Ultramarine and black or of Ultramarine and Sienna;

The term "organic pigment" as used herein refers to synthetic organic coloring compounds, which are carbon based molecules manufactured from petroleum compounds, acids, and other chemicals, usually under intense heat or pressure.

Organic pigments include for instance but are not limited to:
- yellow organic pigments:
   Yellow Lakes, which are transparent pigments used as a yellow to cover other inks but not hide them, Tartrazine Yellow Lake (also called FD&C Yellow No. 5 and used as a dyestuff in foods), Hansa Yellows, and Diarylide Yellows, which are the most common yellow pigments used in printing inks. Fluorescent Yellow is also used in some specialty applications. Organic Yellows are commonly used to replace Chrome Yellows;
- orange organic pigments:
   The most common orange pigment is Diarylide Orange, a transparent yet not very fast-to-light pigment. Other assorted orange materials tend to be used where orange pigments are necessary, and include DNA Orange, Pyrazolone Orange, Fast Orange F2G, Benzimidazolone Orange HL, and Ethyl Lake Red C;
- red organic pigments:
   Reds include Para Reds, Toluidine Red, ["Permanent Red "R"], Carmine F.B., Naphthol Reds and Rubines, Permanent Red FRC, Bordeaux FRR, Rubine Reds, Lithol Reds, BON Red, Lithol Rubine 4B, BON Maroon, Rhodamine 6G, Lake Red C, BON Arylamide Red, Quinacrinone Magentas, Copper Ferrocyanide Pink, Benzimidazolone Carmines and Reds, Azo Magenta G, Anthraquinone Scarlet, and Madder Lakes;
- blue organic pigments:
   'Blues'. Blues include Phthalocyanine Blues (the most commonly used group of organic blue pigments), PMTA Victoria Blue, Victoria Blue CFA, Ultramarine Blue, Indanthrene Blue, Alkali Blues, and Peacock Blue;
- violet organic pigments:
   Violets overlap slightly with some of the bluer reds (such as *Benzimidazolone Bordeaux HF 3R* (see Benzimidazolone Carmines and Reds), and also include such pigments as PMTA Rhodamine, PMTA Violet (also known as Methyl Violet), Dioxazine Violet (RL) Carbazole Violet, Crystal Violet, Dioxazine Violet B, and Thioindigoid Red;
- green organic pigments:
   A common series of greens are the Phthalocyanine Greens as well as the PMTA Greens;
- brown organic pigments:
   Brown pigments include Diazo Brown and Benzimidazolone Brown HFR;

"A non-pigmented fiber cement layer" as used herein, refers to a fiber cement layer (as defined herein), which is substantially free of color pigments (as defined herein). Thus, "a non-pigmented fiber cement layer" as used herein, refers to a fiber cement layer (as defined herein), which does not contain any color pigments or which contains a negligible amount of color pigments (such as between 0% and 1% of color pigments, more particularly between 0% and 0.5% of color pigments, more particularly between 0% and 0.2% of color pigments)

"A pigmented fiber cement layer" as used herein, refers to a fiber cement layer (as defined herein), which comprises one or more color pigments (as defined herein).

The invention will now be further explained in detail with reference to various embodiments. It will be understood that each embodiment is provided by way of example and is in no way limiting to the scope of the invention.

The present invention provides improved fiber cement products, as well as processes for the production thereof, which products can be quickly and easily identified as being asbestos-free in their individual form, even after integration in a building structure.

In a first aspect, the fiber cement products of the present invention comprise at least two fiber cement layers produced by a Hatschek process, characterized in that said at least two fiber cement layers are interlaminated by means of a layer of pigment.

The inventors have found that by introducing one or more interlaminating layers of pigment in the fiber cement products is an excellent way of labelling non-asbestos products. The pigment is clearly visible in each product individually at each of its sections. In this way, the fiber cement products of the invention each contain a clearly visible label indicating the absence of asbestos, without adversely affecting the esthetic appearance or the physico-chemical properties of the product.

Surprisingly enough, the inventors have also found that the interlaminar bonding between different fiber cement layers is even improved through the presence of one or more labelling pigment layers. Without being bound to any theory or hypothesis, the inventors believe that since a pigment particle typically has a smaller diameter than the average diameter of the particles present in a standard fiber cement slurry, the pigment technically functions as a fine-grained filler. By filling up gaps between slurry particles that otherwise would remain void, the presence of a layer of pigment locally increases the interlaminar bonding of the fiber cement end product. It will be clear that the more interlaminar pigment layers are present in the fiber cement product, the stronger this effect will be.

In the context of the present invention, fiber cement products or sheets are to be understood as cementitious products comprising cement and synthetic (and optionally natural) fibers. The fiber cement products are made out of fiber cement slurry, which is formed in a so-called "green" fiber cement product, and then cured.

Dependent to some extent on the curing process used, the fiber cement slurry typically comprises water, process or reinforcing fibers which are synthetic organic fibers (and optionally also natural organic fibers, such as cellulose), cement (e.g. Portland cement), one or more hydrophobizing agents, limestone, chalk, quick lime, slaked or hydrated lime, ground sand, silica sand flour, quartz flour, amorphous silica, condensed silica fume, microsilica, kaolin, metakaolin, wollastonite, mica, perlite, vermiculite, aluminum hydroxide (ATH), pigments, anti-foaming agents, flocculants, and/or other additives.

The fiber cement products of the present invention comprise from about 0.1 weight % to about 5 weight %, such as particularly from about 0.5 weight % to about 4 weight % of fibers, such as more particularly between about 1 weight % to 3 weight % of fibers with respect to the total weight of the fiber cement product.

According to particular embodiments, the fiber cement products according to the invention are characterized in that these comprise fibers chosen from the group consisting of cellulose fibers or other inorganic or organic reinforcing fibers in a weight % of about 0.1 to about 5. In particular embodiments, organic fibers are selected from the group consisting of polypropylene, polyvinylalcohol polyacrylonitrile fibers, polyethyelene, cellulose fibres (such as wood or annual kraft pulps), polyamide fibers, polyester fibers, aramide fibers and carbon fibers. In further particular embodiments, inorganic fibers are selected from the group consisting of glass fibers, rockwool fibers, slag wool fibers, wollastonite fibers, ceramic fibers and the like. In further particular embodiments, the fiber cement products of the present invention may comprise fibrils fibrids, such as for example but not limited to, polyolefinic fibrils fibrids % in a weight % of about 0.1 to 3, such as "synthetic wood pulp".

According to certain particular embodiments, the fiber cement products of the present invention comprise 20 weight % to 95 weight % cement as hydraulic binder. Cement in the products of the invention is selected from the group consisting of Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

According to particular embodiments, the fiber cement products according to the invention optionally comprise further components. These further components in the fiber cement products of the present invention may be selected from the group consisting of water, sand, silica sand flour, condensed silica fume, microsilica, fly-ashes, amorphous silica, ground quartz, the ground rock, clays, pigments, kaolin, metakaolin, blast furnace slag, carbonates, puzzolanas, aluminium hydroxide, wollastonite, mica, perlite, calcium carbonate, and other additives (e.g. colouring additives) etc. It will be understood that each of these components is present in suitable amounts, which depend on the type of the specific fiber cement product and can be determined by the person skilled in the art. In particular embodiments, the total quantity of such further components is preferably lower than 70 weight % compared to the total initial dry weight of the composition.

Further additives that may be present in the fiber cement products of the present invention may be selected from the group consisting of dispersants, plasticizers, antifoam agents and flocculants. The total quantity of additives is preferably between about 0.1 weight % and about 1 weight % compared to the total initial dry weight of the composition.

The fiber cement products of the present invention contain one or more pigment layers, which interlaminate the at least two fiber cement layers.

The pigment layer essentially comprises one or more pigments. Suitable pigments include organic alkaliresistant pigments such as phtalocyanines and azo compounds. Alternatively, pigments in the form of titanium oxide, iron oxides, calcium carbonate, spinell pigments, titanates, clay, aluminum oxide, silicon dioxide, magnesium oxide, magnesium silicate, barium metaborate monohydrate, sodium oxide, potassium oxide, talc, barytes, zinc oxide, zinc sulfite and mixtures thereof can be used in the one or more pigment layers interlaminating the different fiber cement layers in the products according to the present invention.

In particular embodiments of the present invention, the pigment layer(s) as present in the fiber cement products of the present invention comprises essentially alkali-resistant pigment(s), i.e. pigment(s) resistant to a pH of about 8 or higher, such as resistant to a pH of about 9 or higher, such as resistant to a pH of about 10 or higher, such as resistant to a pH of about 11 or higher, more particularly resistant to a pH of higher than about 12 or higher than about 13.

In particular embodiments, the one or more layers of pigment as present in the fiber cement products of the present invention comprise an organic pigment and/or an inorganic pigment.

In particular embodiments, the one or more layers of pigment as present in the fiber cement products of the present invention comprise an opaque pigment and/or a semi-opaque pigment.

In particular embodiments, the one or more layers of pigment as present in the fiber cement products of the present invention comprise a pigment having a bright color.

In particular embodiments, the one or more layers of pigment as present in the fiber cement products of the present invention comprises a red pigment, a blue pigment, a yellow pigment, and/or a green pigment.

In particular embodiments, the one or more layers of pigment as present in the fiber cement products of the present invention comprises at least one green pigment.

In particular embodiments, the one or more layers of pigment as present in the fiber cement products of the present invention comprises at least one pigment chosen from the group consisting of a phthalocyanine green and a PMTA (phosphotungstomolybdic acid) green.

In particular embodiments, the one or more layers of pigment as present in the fiber cement products of the present invention comprises at least one pigment chosen from the group consisting of a cadmium pigment, a chromium pigment and a copper pigment.

In particular embodiments, the one or more layers of pigment as present in the fiber cement products of the present invention further comprise fibers and/or cement.

In further particular embodiments, the one or more layers of pigment as present in the fiber cement products of the present invention are one or more layers of pigmented fiber cement. In these particular embodiments, the fiber cement products of the present invention comprise at least two non-pigmented fiber cement layers, which are interlaminated by one or more pigmented fiber cement layers. In these particular embodiments, the pigmented fiber cement layers at least comprise fibers, cement and an organic pigment and/or an inorganic pigment. In further of these particular embodiments, the pigmented fiber cement layers at least comprise fibers, cement and a red pigment, a blue pigment, a yellow pigment, and/or a green pigment. In yet further of these particular embodiments, the pigmented fiber cement layers at least comprise fibers, cement and a red pigment, a blue pigment, a yellow pigment, and/or a green pigment. In yet further of these particular embodiments, the pigmented fiber cement layers at least comprise fibers, cement and at least one green pigment. In yet further of these particular embodiments, the pigmented fiber cement layers at least comprise fibers, cement and at least one pigment chosen from the group consisting of a phthalocyanine green and a PMTA (phosphotungstomolybdic acid) green.

In particular embodiments, the fiber cement sheets obtainable by the processes of the invention have a predetermined thickness of at least about 5 mm, because otherwise the losses of solid matter with the aspired water increase strongly. In more particular embodiments, the fiber cement sheets obtainable by the processes of the invention have a predetermined thickness of between about 5 mm and about 20 mm, such as between about 5 mm and about 10 mm.

The thickness of the sheets is the control value for the amount of material supplied per time unit. In particular embodiments, the thickness of the produced sheets can be measured. This can for instance be done through a contact lens profile measurement.

The fiber cement products of the present invention comprise at least two fiber cement layers, each of which has a thickness of between 1 mm and 5 mm. The thicknesses of the at least two fiber cement layers in the products of the invention may be different from each other or may be identical.

The fiber cement products of the present invention comprise at least one pigment layer, which interconnects the at least two fiber cement layers and which has a thickness of between 0.01 mm and 0.8 mm. In particular embodiments, the fiber cement products of the present invention comprise at least one pigment layer, which has a thickness of between about 0.1 mm and about 0.5 mm, such as between about 0.2 mm and about 0.3 mm.

The fiber cement products or sheets as referred to herein include roof, wall or ceiling covering products made out of fiber cement, such as fiber cement sidings, fiber cement boards, flat fiber cement sheets, corrugated fiber cement sheets and the like. The fiber cement products or sheets as referred to herein can be used for both outdoor and indoor applications. According to particular embodiments, the fiber cement products according to the invention can be roofing or façade elements, flat sheets or corrugated sheets. According to further particular embodiments, the fiber cement products of the present invention are fiber cement corrugated sheets.

In a second aspect, the present invention provides a process for producing fiber cement products according to the invention, wherein the process comprises the steps of:
a. Providing a fiber cement layer by means of a Hatschek process,
b. Depositing a layer of pigment onto the fiber cement layer,
c. Providing another fiber cement layer onto the layer of pigment by means of a Hatschek process so as to obtain an uncured fiber cement product,
d. Curing the uncured fiber cement product.

A first step in these methods of the invention is providing a fiber cement layer (as defined herein) by means of a Hatschek process.

In this step, a fiber cement slurry can first be prepared by one or more sources of at least cement, water and fibers. In certain specific embodiments, these one or more sources of at least cement, water and fibers are operatively connected to a continuous mixing device constructed so as to form a cementitious fiber cement slurry. In particular embodiments, when using cellulose fibers or the equivalent of waste paper fibers, a minimum of about 3%, such as about 4%, of the total slurry mass of these cellulose fibers is used. In further particular embodiments, when exclusively cellulose fibers are used, between about 4% to about 12%, such as more particularly, between about 7% and about 10%, of the total slurry mass of these cellulose fibers is used. If cellulose fibers are replaced by short mineral fibers such as rock wool, it is most advantageous to replace them in a proportion of 1.5 to 3 times the weight, in order to maintain approximately the same content per volume. In long and cut fibers, such as glass fiber rovings or synthetic high-module fibers, such as polypropylene, polyvinyl acetate, polycarbonate or acrylonitrile fibers the proportion can be lower than the proportion of the replaced cellulose fibers. The fineness of the fibers (measured in Shopper-Riegler degrees) is in principle not critical to the processes of the invention. Yet in particular embodiments, it has been found that a range between about 50 DEG SR and about 65 DEG SR can be particularly advantageous for the processes of the invention.

Once a fiber cement slurry is obtained, the manufacture of a fiber cement layer can be executed according to a Hatschek process, which is the process most widely used for manufacturing fiber cement products. The fundamental part of a Hatschek machinery consists of one or more vats, in each of which vats a cylindrical sieve rotates in contact with a dilute water based fiber cement slurry. On the surface of each of the sieves, a filtering film and mineral materials including (Portland) cement is formed. The sieve cylinder is mounted on an axle and driven by a an endless felt belt wrapped around the top of the sieve by a couch roller. The felt is threaded around a drive or anvil roller and a tail roller. The drive or anvil roller is pushed into hard contact with an accumulation roller. The actual fiber cement layers (as defined herein) are formed as follows. As the clean sieve is pulled under the slurry in the vat, water from the slurry runs through the sieve depositing a soft porous film of fibers and cement on the surface of the sieve. The sieve carrying the film exiting the vat is brought into contact with the felt belt, which is stretched tightly across the sieve. This removes much of the water from the film by forcing it back through the film. The solid film floats on this layer of water and is transferred to the transport belt partly in response to the effect of removal of water and partly because the felt has a greater affinity for the film than the sieve. The film is carried on the transport belt to an accumulator roll to which it is transferred by further removal of water at high pressure. A sufficient number of films are wrapped on the accumulator roll to form a layer of the desired thickness. The stack of films is then removed from the roller and laid out flat to form the fiber cement layer.

After a fiber cement layer has been formed, the second step in the processes according to the present invention is spreading a layer of pigment over the entire top surface of the fiber cement layer.

In particular embodiments, the step (b) of applying a pigment layer to the top surface of the fiber cement layer is performed by spraying (e.g., air-assisted or airless, electrostatic), spattering, aerosolizing, roller coating, curtain coating, brushing, vacuum coating, flood coating or by any suitable method that promotes an even and uniform distribution of the pigment composition over the surface of the fiber cement layer.

In particular embodiments, the layer of pigment is applied in the form of a pigment powder.

In particular embodiments, the layer of pigment is applied in the form of a pigment solution.

In particular embodiments, the layer of pigment is applied in the form of a water-based pigment solution or in the form of a solvent-based pigment solution. In further particular embodiments, In particular embodiments, the layer of pigment is applied in the form of a water-based pigment solution, wherein the amount of pigment in the solution is between about 5% and about 45%, such as between about 10% and about 30%.

In particular embodiments, the layer of pigment is applied in the form of a water-based pigmented fiber cement slurry. In these particular embodiments, the layer of pigment is applied in the form of a water-based slurry comprising at least one or more pigments, cement and/or fibers. In further of these particular embodiments, the layer of pigment is applied in the form of a water-based slurry comprising at least one or more pigments, cement and fibers, such as but not limited to natural fibers (such as cellulose fibers) and/or synthetic fibers (such as polypropylene and/or polyvinyl alcohol fibers). In further of these particular embodiments, the layer of pigment is applied in the form of a water-based slurry, comprising at least one or more pigments, cement and fibers wherein the amount of pigment in the slurry is between about 5% and about 45%, such as between about 10% and about 30%.

In particular embodiments of the invention, a controlled amount of pigment is applied such that only a very thin film of pigment is applied on the top surface of the fiber cement layer. In further particular embodiments of the processes of the invention, a controlled amount of 0.1 mg/cm² to 2 mg/cm² of pigment is applied on the top surface of the fiber cement layer. In yet further particular embodiments, a controlled amount of 0.2 mg/cm² to 1.8 mg/cm², more preferably 0.3 mg/cm² to 1.6 mg/cm², most preferably 0.4 mg/cm² to 1.5 mg/cm² is applied on the top surface of the fiber cement layer.

After a pigment layer has been deposited onto the top surface of the fiber cement layer, the next step is providing another fiber cement layer on top of the layer of pigment by means of a Hatschek process. This essentially is performed in the same way as described above for the first formed fiber cement layer.

In certain particular embodiments of the process according to the invention, steps (b) and (c) are repeated at least once before curing the uncured fiber cement product so as to produce a fiber cement product comprising three or more fiber cement layers which are interlaminated by two or more pigment layers.

In particular embodiments of the process according to the invention, the uncured fiber cement product is cut, molded and/or shaped.

The processes according to the present invention may further comprise the step of cutting the fiber cement products to a predetermined length to form a fiber cement product. Cutting the fiber cement products to a predetermined length can be done by any technique known in the art, such as but not limited to water jet cutting, air jet cutting or the like. The fiber cement products can be cut to any desirable length, such as but not limited to a length of between about 1 m and about 15 m, such as between about 1 m and about 10 m, more particularly between about 1 m and about 5 m, most particularly between about 1 m and about 3 m.

It will be understood by the skilled person that the processes of the present invention may further comprise additional steps of processing the produced fiber cement products.

For instance, in certain particular embodiments, during the processes of the present invention, the fiber cement slurry and/or the fiber cement products may undergo various intermediate treatments, such as but not limited to treatment with one or more hydrophobic agents, treatment with one or more flocculants, additional or intermediate pressing steps, etc.

As soon as the fiber cement products are formed, these are trimmed at the lateral edges. The border strips can optionally be recycled through immediate mixing with the recycled water and directing the mixture to the mixing system again.

In particular embodiments of the present invention, the processes of the present invention may further comprise the step of producing a corrugated hydrophobized fiber cement sheet from the obtained hydrophobized fiber cement sheet. In these embodiments, the step of producing the corrugated fiber cement sheet may comprise for example at least the step of transferring the obtained fiber cement sheet to a corrugated sheet mold to form a corrugated fiber cement sheet. However, other techniques to produce corrugated sheets from flat sheets are known to the skilled person and may as well be used in combination with the processes of the present invention in order to obtain corrugated fiber cement sheets.

In particular embodiments, the processes according to the invention further comprise the step of curing the fiber cement product obtained in step (d).

Indeed, after production, fiber cement products can be allowed to cure over a time in the environment in which they are formed, or alternatively can be subjected to a thermal cure (e.g. by autoclaving or the like).

In further particular embodiments, the "green" fiber cement product is cured, typically by curing to the air (air cured fiber cement products) or under pressure in presence of steam and increased temperature (autoclave cured). For autoclave cured products, typically sand is added to the original fiber cement slurry. The autoclave curing in principle results in the presence of 11.3 Å (angstrom) Tobermorite in the fiber cement product.

In yet further particular embodiments, the "green" fiber cement product may be first pre-cured to the air, after which the pre-cured product is further air-cured until it has its final strength, or autoclave-cured using pressure and steam, to give the product its final properties.

In particular embodiments of the present invention, the processes may further comprise the step of thermally drying the obtained fiber cement products. After curing, the fiber cement product being a panel, sheet or plate, may still comprise a significant weight of water, present as humidity. This may be up to 10 even 15 %w, expressed per weight of the dry product. The weight of dry product is defined as the weight of the product when the product is subjected to drying at 105°C in a ventilated furnace, until a constant weight is obtained.

In certain embodiments, the fiber cement product is dried. Such drying is done preferably by air drying and is terminated when the weight percentage of humidity of the fiber cement product is less than or equal to 8 weight %, even less than or equal to 6 weight %, expressed per weight of dry product, and most preferably between 4 weight % and 6 weight %, inclusive.

In a third aspect, the present invention provides uses of the fiber cement products according to the present invention in the building industry. In particular embodiments, the fiber cement sheets produced by the processes of the present invention can be used as roofing elements, such as corrugated sheets or slates or can be used as an outer surface to walls, both internal as well as external a building or construction, e.g. as façade plate, siding, etc.

In particular embodiments, the fiber cement products of the present invention are building element, such as but not limited to roofing elements, façade elements, or ceiling elements, both for internal and external applications. In further particular embodiments, the fiber cement products of the present invention are roof building sheets, roofing accessories or roofing components. In yet further particular embodiments, the fiber cement products of the present invention are corrugated sheets, slates, roof ridges, roof verges, roof eaves, roof aprons, roof hips, roof valleys, roof inlets and/or outlets and/or roof connections.

## Claims

1. A fiber cement product comprising at least two fiber cement layers produced by a Hatschek process, **characterized in that** said at least two fiber cement layers are interlaminated by means of a layer of pigment.

2. The fiber cement product according to claim 1, wherein said pigment is an organic pigment or an inorganic pigment.

3. The fiber cement product according to claim 1 or 2, wherein said pigment is a green pigment.

4. The fiber cement product according to any one of claims 1 to 3, wherein said pigment is a phtalocyanine pigment.

5. The fiber cement product according to any one of claims 1 to 4, wherein said layer of pigment further comprises fibers and/or cement.

6. The fiber cement product according to any of claims 1 to 5, wherein said at least two fiber cement layers are at least two non-pigmented fiber cement layers.

7. The fiber cement product according to any one of claims 1 to 4, wherein said fiber cement product is a building element.

8. The fiber cement product according to any one of claims 1 to 4, wherein said fiber cement product is a roofing element, a wall element or a ceiling element.

9. The fiber cement product according to any one of claims 1 to 4, wherein said fiber cement product is a roof building sheet or a roofing component.

10. The fiber cement product according to any one of claims 1 to 4, wherein said fiber cement product is a corrugated sheet or a slate.

11. The fiber cement product according to any one of claims 1 to 4, wherein said fiber cement product is chosen from the group consisting of a sheet, ridge, a verge, an eave, an apron, a hip, a valley, an outlet and a connection.

12. A process for producing a fiber cement product according to any of claims 1 to 9, wherein said process comprises the steps of:
a. Providing a fiber cement layer by means of a Hatschek process,
b. Depositing a layer of pigment onto said fiber cement layer,
c. Providing another fiber cement layer onto said layer of pigment by means of a Hatschek process so as to obtain an uncured fiber cement product,
d. Curing said uncured fiber cement product.

13. The process according to claim 12, wherein before curing said steps (b) and (c) are repeated at least once.

14. The process according to claims 12 or 13, wherein before curing said uncured fiber cement product is cut, molded and/or shaped.

15. Use of a fiber cement product according to any of claims 1 to 11 as a building element.

## Patentansprüche

1. Faserzementprodukt, umfassend mindestens zwei Faserzementschichten, die durch ein Hatschek-Verfahren produziert sind,
**dadurch gekennzeichnet, dass** die mindestens zwei Faserzementschichten mittels einer Pigmentschicht miteinander laminiert sind.

2. Faserzementprodukt nach Anspruch 1, wobei das Pigment ein organisches Pigment oder ein anorganisches Pigment ist.

3. Faserzementprodukt nach Anspruch 1 oder 2, wobei das Pigment ein grünes Pigment ist.

4. Faserzementprodukt nach einem der Ansprüche 1 bis 3, wobei das Pigment ein Phthalocyaninpigment ist.

5. Faserzementprodukt nach einem der Ansprüche 1 bis 4, wobei die Pigmentschicht ferner Fasern und/oder Zement umfasst.

6. Faserzementprodukt nach einem der Ansprüche 1 bis 5, wobei die mindestens zwei Faserzementschichten mindestens zwei nicht pigmentierte Faserzementschichten sind.

7. Faserzementprodukt nach einem der Ansprüche 1 bis 4, wobei das Faserzementprodukt ein Bauelement ist.

8. Faserzementprodukt nach einem der Ansprüche 1 bis 4, wobei das Faserzementprodukt ein Dachelement, ein Wandelement oder ein Deckenelement ist.

9. Faserzementprodukt nach einem der Ansprüche 1 bis 4, wobei das Faserzementprodukt eine Dachbauplatte oder eine Dachkomponente ist.

10. Faserzementprodukt nach einem der Ansprüche 1 bis 4, wobei das Faserzementprodukt eine Wellplatte oder ein Schiefer ist.

11. Faserzementprodukt nach einem der Ansprüche 1 bis 4, wobei das Faserzementprodukt aus der Gruppe ausgewählt ist, bestehend aus einer Platte, einem First, einem Bankett, einer Traufe, einer Schürze, einem Grat, einer Kehle, einem Auslass und einer Verbindung.

12. Verfahren zum Produzieren eines Faserzementprodukts nach einem der Ansprüche 1 bis 9, wobei das Verfahren die Schritte umfasst:
a. Bereitstellen einer Faserzementschicht mittels eines Hatschek-Verfahrens,
b. Abscheiden einer Pigmentschicht auf die Faserzementschicht,
c. Bereitstellen einer weiteren Faserzementschicht auf die Pigmentschicht mittels eines Hatschek-Verfahrens, um ein ungehärtetes Faserzementprodukt zu erhalten,
d. Härten des ungehärteten Faserzementprodukts.

13. Verfahren nach Anspruch 12, wobei vor dem Härten die Schritte (b) und (c) mindestens einmal wiederholt werden.

14. Verfahren nach den Ansprüchen 12 oder 13, wobei vor dem Härten das ungehärtete Faserzementprodukt geschnitten, geformt und/oder gestaltet wird.

15. Verwendung eines Faserzementprodukts nach einem der Ansprüche 1 bis 11 als Bauelement.

## Revendications

1. Produit de fibrociment comprenant au moins deux couches de fibrociment produites par un procédé de Hatschek, **caractérisé en ce que** lesdites au moins deux couches de fibrociment sont stratifiées en alternance au moyen d'une couche de pigment.

2. Produit de fibrociment selon la revendication 1, dans lequel ledit pigment est un pigment organique ou un pigment inorganique.

3. Produit de fibrociment selon la revendication 1 ou 2, dans lequel ledit pigment est un pigment vert.

4. Produit de fibrociment selon l'une quelconque des revendications 1 à 3, dans lequel ledit pigment est un pigment phtalocyanine.

5. Produit de fibrociment selon l'une quelconque des revendications 1 à 4, dans lequel ladite couche de pigment comprend en outre des fibres et/ou du ciment.

6. Produit de fibrociment selon l'une quelconque des revendications 1 à 5, dans lequel lesdites au moins deux couches de fibrociment sont au moins deux couches de fibrociment non pigmentées.

7. Produit de fibrociment selon l'une quelconque des revendications 1 à 4, dans lequel ledit produit de fibrociment est un élément de construction.

8. Produit de fibrociment selon l'une quelconque des revendications 1 à 4, dans lequel ledit produit de fibrociment est un élément de toiture, un élément de mur ou un élément de plafond.

9. Produit de fibrociment selon l'une quelconque des revendications 1 à 4, dans lequel ledit produit de fibrociment est une tôle de construction de toit ou un composant de toiture.

10. Produit de fibrociment selon l'une quelconque des revendications 1 à 4, dans lequel ledit produit de fibrociment est une tôle ondulée ou une ardoise.

11. Produit de fibrociment selon l'une quelconque des revendications 1 à 4, dans lequel ledit produit de fibrociment est choisi dans le groupe constitué d'une tôle, d'un faîtage, d'une saillie de rive, d'un avant-toit, d'une allège, d'un arêtier, d'une noue, d'une sortie et d'une liaison.

12. Procédé de production d'un produit de fibrociment selon l'une quelconque des revendications 1 à 9, dans lequel ledit procédé comprend les étapes consistant à :
a. fournir une couche de fibrociment au moyen d'un procédé de Hatschek,
b. déposer une couche de pigment sur ladite couche de fibrociment,
c. fournir une couche de fibrociment supplémentaire sur ladite couche de pigment au moyen d'un procédé de Hatschek de manière à obtenir un produit de fibrociment non durci,
d. durcir ledit produit de fibrociment non durci.

13. Procédé selon la revendication 12, dans lequel avant le durcissement lesdites étapes (b) et (c) sont répétées au moins une fois.

14. Procédé selon les revendications 12 ou 13, dans lequel avant le durcissement ledit produit de fibrociment non durci est coupé, moulé et/ou formé.

15. Utilisation d'un produit de fibrociment selon l'une quelconque des revendications 1 à 11 en tant que matériau de construction.
